Europäisches Patentamt

European Patent Office

Office européen des brevets

(19)

(11) Veröffentlichungsnummer : **0 077 885**
**B1**

(12)                    EUROPÄISCHE PATENTSCHRIFT

(45) Veröffentlichungstag der Patentschrift :
12.11.86

(51) Int. Cl.⁴ : **A 47 B 57/40**, B 65 G   1/02

(21) Anmeldenummer : 82106998.6

(22) Anmeldetag : 03.08.82

(54) Palettenregal.

(30) Priorität : 24.10.81 DEU 8131121

(43) Veröffentlichungstag der Anmeldung :
04.05.83 Patentblatt 83/18

(45) Bekanntmachung des Hinweises auf die Patenterteilung : 12.11.86 Patentblatt 86/46

(84) Benannte Vertragsstaaten :
BE DE FR GB NL

(56) Entgegenhaltungen :
FR-A- 1 341 934
GB-A-   863 894
GB-A- 2 097 087
US-A- 3 233 374
US-A- 3 695 456

(73) Patentinhaber : Thyssen Industrie AG
Am Thyssenhaus 1
D-4300 Essen 1 (DE)

(72) Erfinder : Grünhoff, Heinz
Gadumer Strasse 14
D-4750 Unna-Königsborn (DE)
Erfinder : Wrobbel, Herbert
Geitlingstrasse 51
D-4630 Bochum 6 (DE)
Erfinder : Ceglarek, Martin
Massener Hellweg 57
D-4750 Unna-Massen (DE)
Erfinder : Merle, Günter
Im Gründken 7
D-5758 Fröndenberg-Langschede (DE)

(74) Vertreter : Eberhard, Friedrich, Dr.
Am Thyssenhaus 1
D-4300 Essen 1 (DE)

**Beschreibung**

Die Erfindung betrifft ein Palettenregal aus durch Querbinder zu Leitern verbundenen, im Querschnitt rechteckigen Pfosten mit Ausnehmungen an den äußeren Pfostenflächen, in die L-förmige, an den Pfosten anliegende Agraffen mit aus einer Innenfläche eines L-Schenkels vorragenden Haken eingreifen, wobei wenigstens ein Teil der Agraffen paarweise mit Holmen verbunden ist, die sich zwischen Pfosten benachbarter Leitern erstrecken.

Ein bekanntes Palettenregal der eingangs beschriebenen Gattung (DE-AS 27 46 852) dient zur Lagerung von Paletten, wobei die Paletten, meistens mehrere nebeneinander, auf den Holmen abgesetzt werden. Das bekannte Palettenregal ist wegen besonderer Profilierung der Pfosten und Holme bei gleichem Materialaufwand wesentlich höher belastbar als andere Palettenregale. Der Materialaufwand wird allerdings unverhältnismäßig groß, wenn dieses Palettenregal als Einplatzregal eingesetzt wird, bei dem jeweils nur eine Palette in ein zwischen benachbarten Leitern gebildetes Fach eingesetzt wird.

Daneben kennt man Einplatzregale, deren Leitern aus Normalständerprofilen aufgebaut sind und bei denen Palettenauflagen seitlich an die Leitern angeschraubt werden. Das ist nachteilig, wenn die Höhe der zwischen benachbarten Leitern von den Palettenauflagen gebildeten Fächer verändert bzw. an unterschiedliche Palettenhöhen angepaßt werden soll. Bei solchen Regalen wird die Standsicherheit in der Längsrichtung des Regals durch Einbau von Diagonalen erreicht.

Aufgabe der Erfindung ist es deshalb, ein Palettenregal der eingangs beschriebenen Gattung so zu gestalten, daß es als Einplatzregal eingesetzt werden kann, bei dem die Palettenauflagen ohne Verschraubungen an den Leitern gehalten sind.

Diese Aufgabe wird dadurch gelöst, daß die freien Agraffen einen hakenfreien L-Schenkel aufweisen, der sich bis über die zugeordnete Pfostenfläche hinauserstreckt und dort eine Reihe von Schlitzen aufweist, in die winkelförmige Palettenauflagen mit zugeordneten Haken eingehängt sind.

Die Erfindung geht davon aus, daß bei einem nach der DE-AS 27 46 852 ausgebildeten Palettenregal die Anzahl der zwischen den Leitern angeordneten Holme dann verringert werden kann, wenn dieses Palettenregal als Einplatzregal ausgebildet wird. Dann ergeben sich aber Probleme im Hinblick auf die Anordnung zusätzlicher Palettenauflagen, weil die bisher verwendeten Agraffen lediglich von der Vorderseite bzw. von der Rückseite des Regals an die zugeordneten Pfosten angehängt werden können. Werden jedoch freie Agraffen der beschriebenen Art verwendet, dann lassen sich Palettenauflagen in beliebiger Anordnung seitlich in das Regal einhängen und damit befestigen, ohne daß die bei Einplatzregalen bisher übliche Verschraubung notwendig wäre. Die Anordnung dieser Palettenauflagen und damit die Höhe der von den Palettenauflagen gebildeten Fächer läßt sich ohne Schwierigkeiten verändern und den Höhen der jeweils unterzubringenden Paletten anpassen. Derartige Agraffen können auch an Palettenregalen eingesetzt werden, die aus sogenannten Normalständerprofilen aufgebaut sind.

Im einzelnen kann die Erfindung wie folgt vorteilhaft ausgestaltet sein.

Dadurch, daß auf die Holme winkelförmige Palettenauflagen aufgesetzt werden, die an ihren auf den Holmen aufliegenden Schenkeln U-förmige, die Holme überfassende Profilabschnitte aufweisen, sind auch die Regalstellen, an denen die Agraffen mit den Holmen eingehängt sind, für die Einplatzlagerung einsetzbar. Die Belastung durch die aufgesetzten Paletten drückt dabei die Holme nach unten und fördert durch den dadurch verursachten Anzug der Agraffen gegen die Pfosten die Stabilisierung des Regals. So wird bei den erfindungsgemäßen Regalen das Einspannmoment der mit den Agraffen verschweißten Holme zur Stabilisierung benutzt und die nachteiligen Diagonal-Versteifungen der bekannten Regale damit vermieden.

Da die Palettenauflagen und die Agraffen, insbesondere deren verlängerte Schenkel unter Umständen ganz erhebliche Lasten zu übertragen haben, ist es zweckmäßig, wenn die verlängerten Schenkel der Agraffen an ihren Enden abgewinkelt sind, wodurch ihr Widerstandsmoment und ihre Biegesteifigkeit vergrößert werden.

Die Palettenauflagen sind zweckmäßig L-Winkel, deren einer Schenkel im Bereich der Winkelenden jeweils außenseitig zwei im Schlitzabstand angeordnete Vorsprünge trägt, von denen der obere eine nach oben gerichtete hakenförmige Abwinklung aufweist. Damit werden die Palettenauflagen lediglich durch Eigengewicht und ohne Klemmkräfte an den Agraffen gehalten. Die L-Winkel können zusätzlich durch Abkantungen an den Außenkanten des L versteift werden.

Die Nutzung des Palettenregals im Hinblick auf die Höhe der durch die Palettenauflagen gebildeten Fächer wird verbessert, wenn der Schlitzabstand an den Agraffen kleiner ist, vorzugsweise halb so groß ist, wie der Ausnehmungsabstand an den Pfosten. Üblicherweise beträgt nämlich der Ausnehmungsabstand an den Pfosten 100 mm. Wenn der Schlitzabstand kleiner, vorzugsweise 50 mm ist, ergeben sich zusätzliche Möglichkeiten für die Einstellung der jeweils benötigten Höhe eines Fachs.

Vorteilhaft weisen die Palettenauflagen an ihren rückwärtigen Enden jeweils eine Durchschubsicherung auf, die nach bevorzugter Ausführung eine senkrecht zu der Ebene der L-Schenkel angeordnete Platte ist.

Dadurch, daß sich die Agraffen auch in Pfosten für Mehrplatzpalettenregale einhängen lassen,

ergibt sich die vorteilhafte Möglichkeit, übergangslos die Kombination eines Einplatzsystems mit einem Mehrplatzsystem durchzuführen.

Im folgenden wird ein in der Zeichnung dargestelltes Ausführungsbeispiel der Erfindung erläutert ; es zeigen :

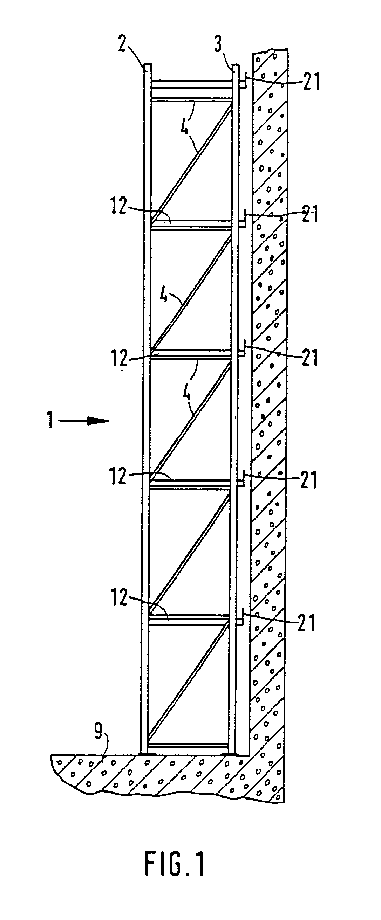

Figur 1 eine Seitenansicht eines einseitigen Einplatzregals,

Figur 2 eine Vorderansicht des Gegenstandes nach Fig. 1,

Figur 3 in vergrößerter Darstellung einen Teil des Gegenstandes nach Fig. 2,

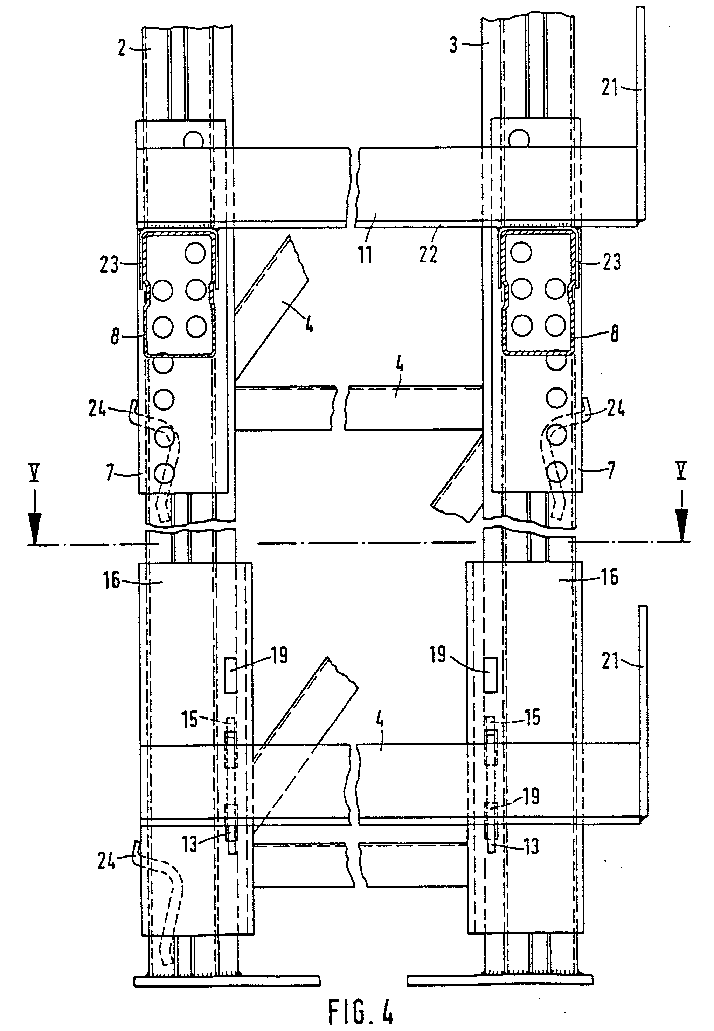

Figur 4 eine Ansicht in Richtung des Pfeils IV auf den Gegenstand nach Fig. 3,

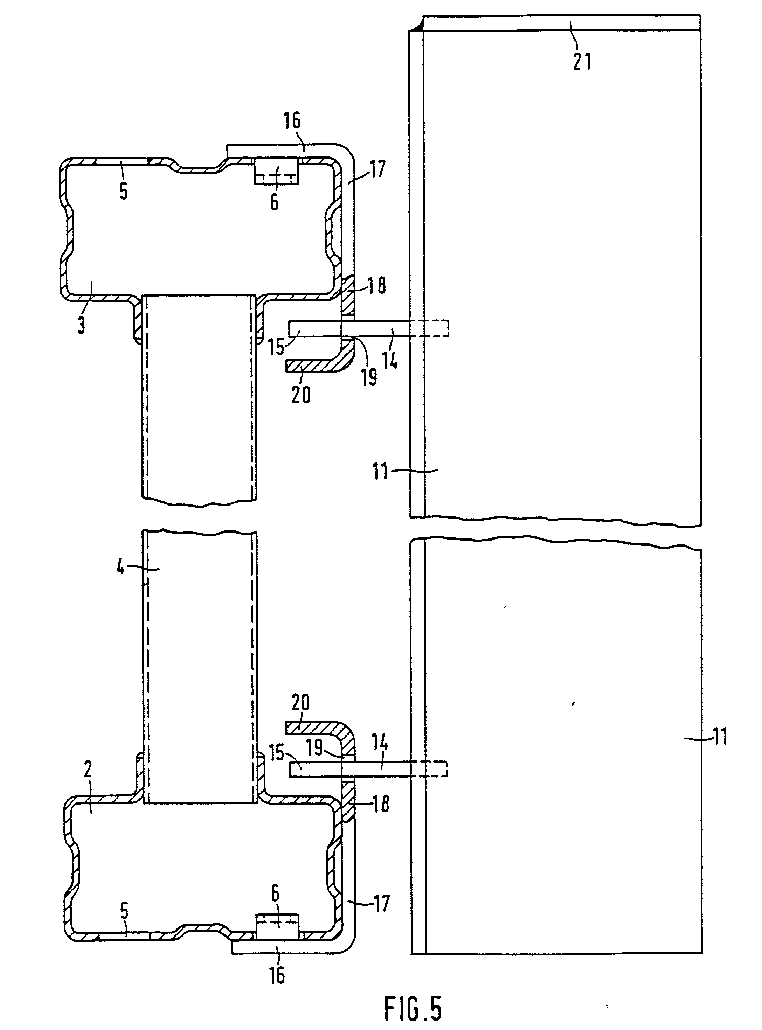

Figur 5 einen Schnitt in Richtung V-V durch den Gegenstand nach Fig. 4.

Das in der Zeichnung dargestellte Palettenregal ist ein Einplatzregal. Es besteht in seinem grundsätzlichen Aufbau aus Leitern 1, die jeweils zwei Pfosten 2, 3 mit im wesentlichen rechteckigem Querschnitt aufweisen sowie Querbinder 4, die die Pfosten 2, 3 verbinden. An den jeweils äußeren Pfostenflächen befinden sich gereihte Ausnehmungen 5, in die Haken 6 eingreifen, welche von den Innenflächen der L-Schenkel winkelförmiger Agraffen 7 vorragen. Die Agraffen 7 sind paarweise mit Holmen 8 verbunden, die benachbarte Leitern 1 auf Abstand halten und gegen Kippen in Regallängsrichtung über ihr Einspannmoment sichern. Einzelheiten der Profilform der Pfosten 2, 3 und der Holme 8 sind in der DE-AS 27 46 852 erläutert, auf die in diesem Zusammenhang Bezug genommen wird.

Die Pfosten 2, 3 der Leitern 1 sind am Boden 9 befestigt. Die Holme 8 dienen der Stabilisierung des Regals. Sie sind gleichzeitig auch Auflager für Paletten 10. Das wird weiter unten noch erläutert.

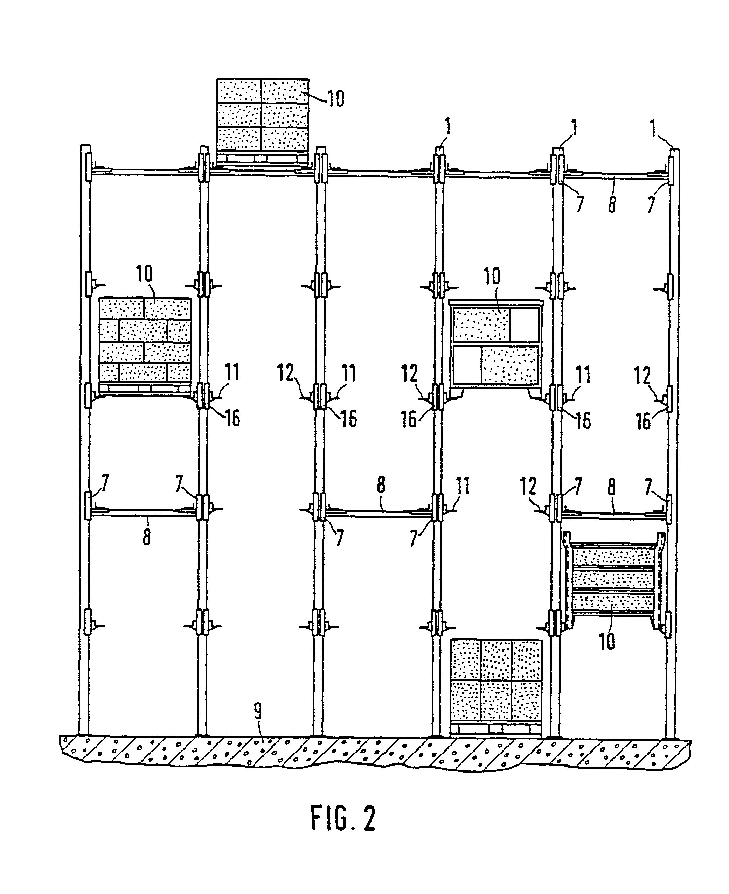

Wie man insbesondere aus Fig. 2 entnimmt, sind alle Leitern 1 durch obere Holme 8 aneinander abgestützt. Darüber hinaus enthält jedes zweite Regalfeld etwa auf halber Höhe zusätzliche Holme 8, die der Stabilisierung dienen. Die dazwischenliegenden Regalfelder sind frei.

In die Regalfelder sind Palettenauflagen eingehängt, die jeweils aus zwei L-förmigen Winkeln 11, 12 bestehen, die an die Seiten benachbarter Leitern 1 eingehängt werden. Dazu weisen die Winkel 11, 12 an den Außenseiten ihrer jeweils aufstehenden Schenkel zwei Vorsprünge 13, 14 auf, von denen der obere Vorsprung 14 eine nach oben gerichtete hakenförmige Abwinklung 15 besitzt.

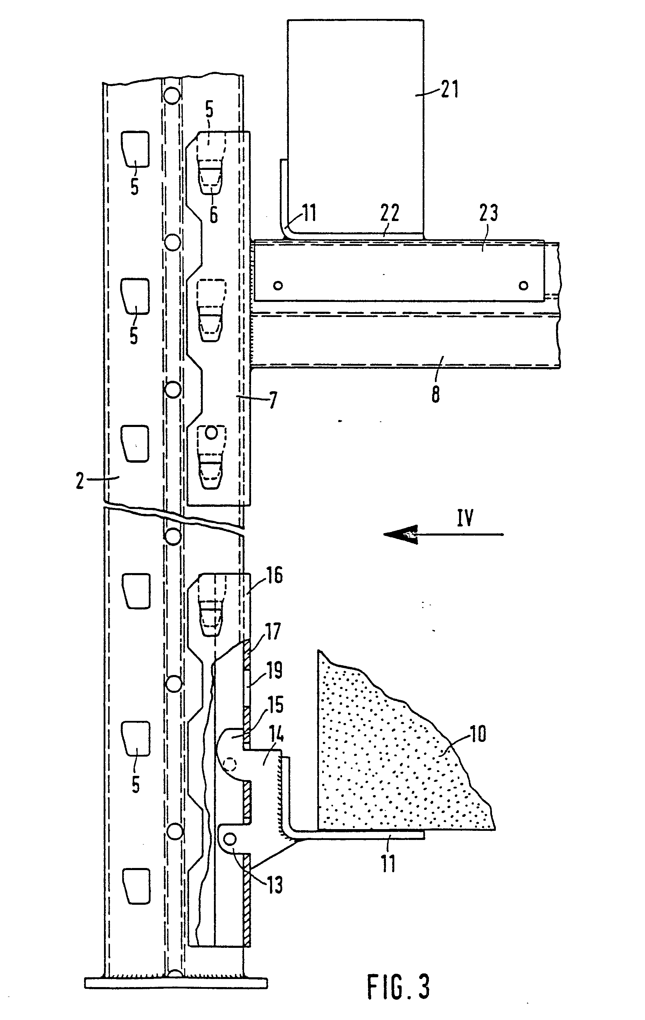

Mit diesen Vorsprüngen 13, 14 werden die Winkel 11, 12 in freie Agraffen 16 eingehängt, die ebenso wie die mit den Holmen 8 verbundenen Agraffen 7 L-förmig ausgebildet sind und mit einem Schenkel an der Profilvorderfläche der Pfosten 2 bzw. 3 anliegen und dort mit von der Innenseite vorstehenden Haken 6 in die Ausnehmungen 5 der Pfosten 2, 3 eingreifen. Der andere L-Schenkel 17 der freien Agraffen 16, der an der Seitenfläche der Pfosten 2, 3 anliegt, erstreckt sich über diese Seitenfläche hinaus und besitzt an seinem überstehenden Abschnitt 18 eine Reihe von Schlitzen 19, in die die Vorsprünge 13, 14 eingreifen (Figur 3). Schlitzabstand und Vorsprungabstand sind einander angepaßt. Beim dargestellten Ausführungsbeispiel ist der Abstand der Schlitze 19 kleiner als der Abstand der Ausnehmungen 5 an den Pfosten 2, 3. Der Abstand der Ausnehmungen 5 beträgt 100 mm, und der Abstand der Schlitze 19 an den freien Agraffen 16 beträgt 50 mm. Dadurch ergibt sich eine Verstellmöglichkeit in Schritten von 50 mm ; natürlich sind auch andere Teilungen möglich.

Zur Erhöhung der Steifigkeit und Stabilität sind die überstehenden Abschnitte 18 der freien Agraffen 16 an ihren Enden bei 20 abgewinkelt. An den rückwärtigen Enden der Palettenauflagen 11, 12 befindet sich jeweils eine Durchschubsicherung in Form einer senkrecht zu den Ebenen der L-Schenkel angeordneten Platte 21.

Auch die Holme 8 tragen Palettenauflagen in Form von Winkeln 11, 12, an deren auf dem zugeordneten Holm 8 aufliegenden Schenkel 22 jeweils ein U-Profilabschnitt 23 befestigt ist, der den zugeordneten Holm 8 überfaßt.

Die Palettenauflagen bzw. die Winkel 11, 12 können ohne Schwierigkeiten seitlich in die Regalfelder eingehängt werden, nachdem vorher die freien Agraffen 16 in geeigneter Höhe an die zugeordneten Pfosten 2 bzw. 3 angehängt worden sind. Der gegenüber dem Abstand der Ausnehmungen 5 an den Pfosten 2, 3 geringere Abstand der Schlitze 19 an den freien Agraffen 16 ermöglicht eine zusätzliche Einstellung der Höhe der von den Palettenauflagen gebildeten Fächern unabhängig von dem Abstand der Ausnehmungen 5 an den Pfosten 2, 3. Die Agraffen 7 bzw. 16 können gegebenenfalls durch zusätzliche Sicherungshaken 24 gesichert werden. Es versteht sich, daß das Regal nicht nur als einseitiges, sondern auch als doppelseitiges Regal Verwendung finden kann. Die Agraffen 7, 16 lassen sich auch in Pfosten für Mehrplatzpalettenregale einhängen. Dies ermöglicht die übergangslose, beliebige Kombination von Einplatz- und Mehrplatzsystemen.

**Patentansprüche**

1. Palettenregal aus durch Querbinder zu Leitern verbundenen, im Querschnitt rechteckigen Pfosten mit Ausnehmungen an den äußeren Pfostenflächen, in die L-förmige, an den Pfosten anliegende Agraffen mit aus einer Innenfläche eines L-Schenkels vorragenden Haken eingreifen, wobei wenigstens ein Teil der Agraffen paarweise mit Holmen verbunden ist, die sich zwischen Pfosten benachbarter Leitern erstrecken, dadurch gekennzeichnet, daß wenigstens die freien Agraffen (16) einen hakenfreien L-Schenkel (17) aufweisen, der sich bis über die zugeordnete Pfostenfläche hinaus erstreckt und dort eine Reihe von Schlitzen (19) aufweist, in die winkelförmige Palettenauflagen (11, 12) mit zugeordneten Haken (13, 14, 15) eingehängt sind.

2. Palettenregal nach Anspruch 1, gekennzeichnet durch auf die Holme (8) aufsetzbare winkelförmige Palettenauflagen (11, 12), die an ihrem auf dem Holm (8) aufliegenden Schenkel (22) U-förmige, die Holme (8) überfassende Profilabschnitt (23) aufweisen.

3. Palettenregal nach Anspruch 1 oder 2, dadurch gekennzeichnet, daß die verlängerten Schenkel (17) der Agraffen (16) an ihren Enden (20) abgewinkelt sind.

4. Palettenregal nach einem der Ansprüche 1-3, dadurch gekennzeichnet, daß die Palettenauflagen L-Winkel (11, 12) sind, deren einer Schenkel im Bereich der Winkelenden jeweils außenseitig zwei im Schlitzabstand angeordnete Vorsprünge (13, 14) trägt, von denen der odere (14) eine nach oben gerichtete hakenförmige Abwinklung (15) aufweist.

5. Palettenregal nach einem der Ansprüche 1-4, dadurch gekennzeichnet, daß der Schlitzabstand an den Agraffen (16) kleiner ist als der Ausnehmungsabstand an den Pfosten (2, 3).

6. Palettenregal nach Anspruch 5, dadurch gekennzeichnet, daß der Schlitzabstand halb so groß ist wie der Ausnehmungsabstand.

7. Palettenregal nach einem der Ansprüche 1-6, dadurch gekennzeichnet, daß die Palettenauflagen (11, 12) an ihren rückwärtigen Enden jeweils eine Durchschubsicherung (21) aufweisen.

8. Palettenregal nach Anspruch 7, dadurch gekennzeichnet, daß die Durchschubsicherung eine senkrecht zu den Ebenen der L-Schenkel angeordnete Platte (21) ist.

## Claims

1. Pallet shelving comprising rectangular cross section uprights which are connected by transverse ties to form ladder structures and have apertures at the outer upright surfaces into which L-shaped clips abutting on the uprights engage by means of hooks projecting from an inner surface of an L-leg, at least some of the clips being connected pairwise with cross-bars which extend between uprights of neighbouring ladder structures, characterised in that at least the free clips (16) have a hook-free L-leg (17) which extends to beyond the associated upright surface and comprises thereat a series of slots (19) into which angular pallet rests (11, 12) with associated hooks (13, 14, 15) are hung.

2. Pallet shelving according to claim 1, characterised by angular pallet rests (11, 12) which are adapted to be placed on the cross-bars (8) and which at their leg (22) resting on the cross-bar (8) comprise U-shaped section elements (23) extending over the cross-bars (8).

3. Pallet shelving according to claim 1 or 2, characterised in that the extended legs (17) of the clips (16) are angled-over at their ends (20).

4. Pallet shelving according to one of claims 1-3, characterised in that the pallet rests are L-angles (11, 12) on leg of which comprises in the region of the angle ends in each case, externally, two projections (13, 14) which are arranged at the slot spacing and the upper (14) of which comprises an upwardly directed hook-shaped angled portion (15).

5. Pallet shelving according to one of claims 1-4, characterised in that the slot spacing at the clips (16) is smaller than the spacing of the apertures at the uprights (2, 3).

6. Pallet shelving according to claim 5, characterised in that the slot spacing is half as great as the spacing of the apertures.

7. Pallet shelving according to one of claims 1-6, characterised in that the pallet rests (11, 12) each comprise at their rear ends a guard (21) preventing sliding-through.

8. Pallet shelving according to claim 7, characterised in that the slide-through guard is a plate (21) which is situated at right angles to the planes of the L-legs.

## Revendications

1. Rayonnage pour palettes se composant de poteaux de section rectangulaire, reliés par des traverses pour former des échelles, et pourvus sur leurs surfaces extérieures d'évidements dans lesquels s'accrochent des agrafes en forme de L, s'appuyant sur les poteaux, et pourvues des crochets faisant saillie d'une surface intérieure d'une branche du L, au moins une partie des agrafes étant reliées deux à deux par des lisses qui s'étendent entre des poteaux d'échelles adjacentes, caractérisé en ce qu'au moins les agrafes libres (16) comportent une branche de L (17) exempte de crochet, qui s'étend jusqu'au-delà de la surface de poteau associée, et qui comporte à cet endroit une série de fentes (19) dans lesquelles sont accrochés les appuis de palettes (11, 12) de forme coudée, au moyen de crochets associés (13, 14, 15).

2. Rayonnage pour palettes selon la revendication 1, caractérisé par des appuis de palettes (11, 12) de forme coudée pouvant être mis en place sur les lisses (8) et qui comportent, sur leur côté (22) s'appuyant contre la lisse (8), des parties profilées (23) en forme de U s'emboîtant sur les lisses (8).

3. Rayonnage pour palettes selon la revendication 1 ou 2, caractérisé en ce que les branches allongées (17) des agrafes (16) sont pliées à leurs extrémités (20).

4. Rayonnage pour palettes selon l'une des revendications 1 à 3, caractérisé en ce que les appuis de palettes sont des cornières (11, 12) dont une aile comporte, dans la zone des extrémités de la cornière, et à chaque fois sur le côté extérieur, deux saillies (13, 14) réparties à l'espacement des fentes, dont la saillie supérieure (14) comporte une partie recourbée (15) en forme de crochet dirigé vers le haut.

5. Rayonnage pour palettes selon l'une des revendications 1 à 4, caractérisé en ce que l'espacement des fentes ménagées dans les agrafes (16) est plus petit que l'espacement des évidements ménagés dans les poteaux (2, 3).

6. Rayonnage pour palettes selon la revendication 5, caractérisé en ce que l'espacement des fentes est égal à la moitié de l'espacement des évidements.

7. Rayonnage pour palettes selon l'une des revendications 1 à 6, caractérisé en ce que les appuis de palettes (11, 12) comportent chacun à leur extrémité arrière, une butée de fin de course (21).

8. Rayonnage pour palettes selon la revendication 7, caractérisé en ce que la butée de fin de course est constituée par une plaque (22) disposée perpendiculairement aux plans des branches du L.

FIG.1

FIG. 2

0 077 885

FIG.3

3

**0 077 885**

FIG. 4

4

FIG.5